# FASCICULE DE BREVET EUROPEEN

(11) **EP 3 018 886 B1**
(45) Date de publication et mention de la délivrance du brevet: **22.04.2020**
(21) Numéro de dépôt: 15192152.5
(22) Date de dépôt: 29.10.2015
(51) Int. Cl.: H04L 29/08, H04L 29/06, H04L 12/931, H04L 12/935

(54) **PROCEDE DE DISTRIBUTION DE TRAMES RESEAU VERS DES RESSOURCES DE TRAITEMENT**
VERFAHREN ZUR WEITERLEITUNG VON NETZRAHMEN ZU VERARBEITUNGSRESSOURCEN
A METHOD FOR DISPATCHING NETWORK FRAMES AMONG PROCESSING RESOURCES

(30) Priorité: 07.11.2014 FR 1460773
(43) Date de publication de la demande: 11.05.2016
(73) Titulaire: Kalray, 91400 Orsay (FR)
(72) Inventeur: COUVERT, Patrice, 38330 Saint-Ismier (FR); RYBCZYNSKA, Marta, 38000 Grenoble (FR); MARIJON, Siméon, 91400 Orsay (FR); KALEMKARIAN, Yann, 91400 Orsay (FR); GANNE, Benoît, 91400 Orsay (FR); BLAMPEY, Alexandre, 38360 Sassenage (FR)
(74) Mandataire: de Jong, Jean Jacques

(56) Documents cités:
- US-A1- 2005 256 975
- US-B1- 7 529 245

## Description

### Domaine technique

L'invention est relative aux équipements de traitement réseau, notamment pour les réseaux de type Ethernet.

### Arrière-plan

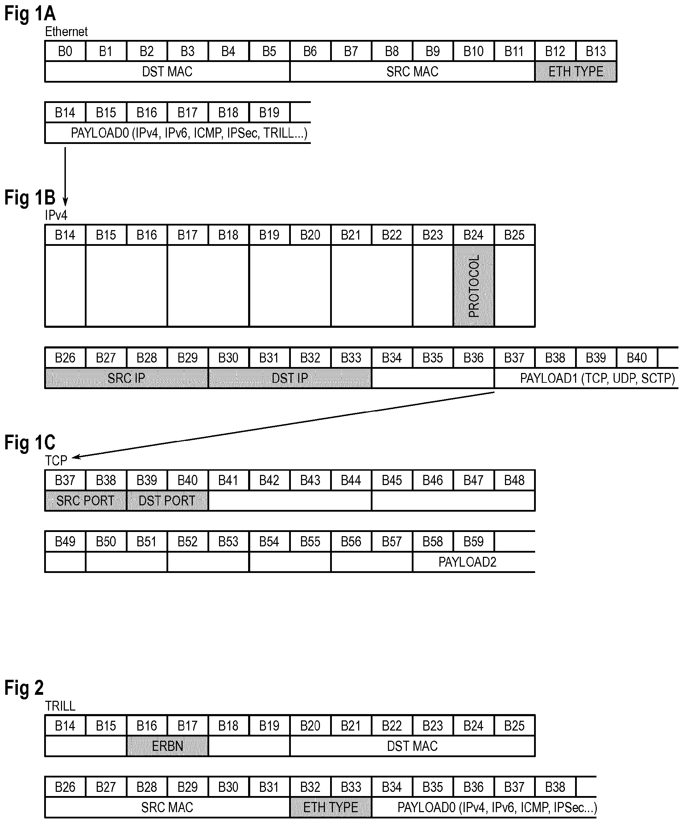

Les figures 1A à 1C représentent un exemple de succession d'entêtes au début d'une trame Ethernet. Une trame Ethernet est généralement formée d'une suite de sous-trames imbriquées de façon hiérarchique et correspondant à différentes couches de la suite des protocoles Internet.

La figure 1A illustre le premier en-tête d'une trame Ethernet. Le protocole Ethernet forme une « couche de liaison de données » dans la suite des protocoles Internet, comme les protocoles Token Ring, PPP, HDLC, ATM, Wi-Fi, etc. Les six premiers octets B0 à B5 véhiculent l'adresse MAC destination, les six octets suivants B6 à B11 véhiculent l'adresse MAC source, et les octets B12 et B13 (ETH TYPE) définissent le protocole de la « couche réseau » ou « couche Internet » imbriquée à partir de l'octet B14 dans la trame Ethernet, comme IP (IPv4, IPv6), ICMP, IPX, etc.

La figure 1B illustre un en-tête d'une sous-trame IPv4 pouvant débuter à l'octet B14. L'en-tête d'une trame IPv4 comprend divers paramètres, dont on retiendra le « protocole » identifié à l'octet B24, et les adresses IP source et destination identifiées aux huit octets B26 à B33. L'octet «protocole» définit la «couche transport» imbriquée dans la trame IPv4 à partir de l'octet B37, comme TCP, UDP, ou SCTP.

La figure 1C illustre un en-tête d'une sous-trame TCP pouvant débuter à l'octet B37. Les quatre octets B37 à B40 identifient le port source et le port destination.

Le paramètre ETH TYPE véhiculé aux octets B12 et B13 de la trame Ethernet peut également spécifier que la trame Ethernet véhicule plusieurs sous-trames de même niveau hiérarchique que la trame Ethernet, par exemple plusieurs sous-trames Ethernet. C'est le cas, par exemple, lorsque le paramètre ETH TYPE spécifie le protocole TRILL ("Transparent Interconnection of Lots of Links").

La figure 2 illustre un début de trame TRILL imbriquée à partir de l'octet B14 dans la trame Ethernet de la figure 1A. Une trame TRILL peut véhiculer plusieurs sous-trames Ethernet, chacune ayant un en-tête de même structure que la figure 1A. Chaque sous-trame Ethernet est précédée d'un préambule de six octets, dont les troisième et quatrième octets véhiculent un paramètre ERBN ("Egress RBridge Name", ou nom du routeur sortant).

Une trame Ethernet peut, dans un mode dit VLAN, définir des réseaux locaux virtuels. Dans ce cas, le paramètre ETH TYPE est précédé de une à trois étiquettes de quatre octets servant à identifier le réseau local virtuel.

La norme IEEE 802.3ba prévoit une liaison Ethernet pouvant, sur des câbles à quatre paires torsadées, atteindre un débit de 40 Gbits/s, à savoir 10 Gbits/s par paire torsadée.

Une carte d'interface réseau capable d'exploiter pleinement ce débit demande des ressources de calcul conséquentes, notamment pour décoder les en-têtes, calculer les signatures de vérification d'erreur, extraire les paquets, et aiguiller les paquets vers leurs destinations finales.

Le document US7529245 décrit un système dans lequel des automates câblés permettent de décoder différentes couches réseau de trames. Chaque automate y est dédié à une couche réseau correspondante.

### Résumé

On prévoit de façon générale un procédé de traitement de trames de données arrivant sur une interface réseau, comprenant les étapes suivantes mises en œuvre dans l'interface réseau : stocker un jeu de positions cible, positions auxquelles sont attendus, dans une trame, au moins un paramètre caractérisant une sous-trame et des paramètres caractérisant une session client-serveur ; stocker une valeur attendue pour le paramètre de sous-trame ; recevoir une trame courante ; démarrer un compteur de position de la trame; et lorsque la position courante indiquée par le compteur correspond à la position cible du paramètre de sous-trame, comparer la valeur courante reçue de la trame à la valeur attendue ; en cas d'égalité, calculer un index à partir des valeurs reçues aux positions cible des paramètres de session ; et diriger la trame courante vers une ressource de traitement associée à l'index.

Le procédé peut comprendre les étapes consistant à produire les données de la trame courante par mots de taille fixe ; lorsqu'un mot courant de la trame inclut une position cible, stocker le mot dans un registre respectif d'un banc de registres de valeurs extraites ; configurer un masque d'index sur l'ensemble du banc de registres de valeurs extraites pour annuler toutes les valeurs sauf celles aux positions des paramètres de session ; et calculer l'index sur l'ensemble du banc de registres de valeurs extraites à travers le masque d'index.

Le procédé peut comprendre les étapes consistant à stocker des valeurs attendues pour plusieurs paramètres de sous-trame dans un banc de registres de valeurs attendues en correspondance avec les registres de valeurs extraites ; configurer un masque de comparaison sur l'ensemble du banc de registres de valeurs extraites pour annuler toutes les valeurs sauf celles aux positions des paramètres de sous-trame ; et comparer le contenu du banc de registres de valeurs extraites au contenu du banc de registres de valeurs attendues à travers le masque de comparaison.

Le procédé peut comprendre les étapes consistant à stocker les positions cible dans des registres respectifs d'un banc de registres de positions cible, associés respectivement aux registres de valeurs extraites ; confronter simultanément les contenus de tous les registres de positions cible au compteur de position ; et en cas de correspondance entre le compteur de position et le contenu d'un registre de position cible, stocker le mot courant de la trame dans le registre de valeur extraite associé au registre de position cible.

Le procédé peut comprendre les étapes consistant à prévoir une pluralité de règles de répartition indépendantes, où chaque règle de répartition utilise un jeu de positions cible, un banc de registres de valeurs extraites, un masque d'index, un masque de comparaison, et un banc de registres de valeurs attendues ; définir un ordre de priorité entre les règles de répartition ; évaluer en parallèle les règles de répartition sur une trame courante ; et utiliser l'index produit par la règle de répartition ayant la priorité la plus élevée parmi plusieurs règles satisfaites simultanément.

Le procédé peut comprendre les étapes consistant à définir les positions cible des paramètres de session pour que chaque valeur reçue à une position de paramètre de session soit stockée dans un registre de valeur extraite distinct ; et si deux registres de valeurs extraites sont destinés à contenir respectivement un paramètre de source et un paramètre de destination, calculer l'index en utilisant dans le même ordre la valeur maximale des contenus des deux registres et la valeur minimale des contenus des deux registres.

### Description sommaire des dessins

Des modes de réalisation seront exposés dans la description suivante, faite à titre non limitatif en relation avec les figures jointes parmi lesquelles :
- les figures 1A à 1C et 2, précédemment décrites, représentent des exemples d'en-têtes pouvant être présents dans des trames Ethernet ;
- la figure 3 est un schéma de principe d'une carte d'interface réseau exploitant un processeur à cœurs multiples pour traiter des trames arrivant à un débit élevé ;
- la figure 4 est un schéma de principe illustrant une méthode de répartition de trames entrantes vers des cœurs de processeur ;
- la figure 5 est un schéma d'un mode de réalisation de circuit de répartition utilisant le principe de la figure 4 ;
- la figure 6A illustre un exemple de contenu d'un banc de registres de valeurs extraites, tel que produit par le circuit de la figure 5 ;
- la figure 6B illustre un autre exemple de contenu du banc de registres de valeurs extraites ;
- la figure 7 est un schéma d'un mode de réalisation de circuit de répartition capable de produire le contenu du banc de registres de la figure 6B ; et
- la figure 8 représente schématiquement un mode de réalisation de circuit capable de répartir les trames selon plusieurs règles.

### Description de modes de réalisation

Les cartes d'interface réseau courantes, dont le débit peut aller jusqu'à 1 Gbit/s, sont conçues pour transmettre les trames brutes au processeur hôte. Le processeur hôte a alors la charge d'effectuer des traitements sur les trames, comme l'extraction des données utiles, la gestion des erreurs, la fourniture des données aux services destinataires, etc.

Avec des cartes d'interface réseau selon la norme IEEE 802.3ba, le débit peut être multiplié par 40. Si le processeur hôte devait assurer les mêmes traitements que pour une carte 1 Gbit, celui-ci pourrait être accaparé par le traitement des trames réseau et ne plus disposer de ressources pour ses tâches principales. C'est pourquoi on a proposé des nouvelles cartes réseau conçues pour mettre en œuvre de manière câblée certaines tâches qui étaient dévolues au processeur hôte. Cependant, de telles cartes deviennent obsolètes lorsque les normes et les protocoles évoluent. On souhaite ainsi que la carte réseau soit programmable pour qu'elle puisse être adaptée aux évolutions des normes et des protocoles par une simple mise à jour de micrologiciel.

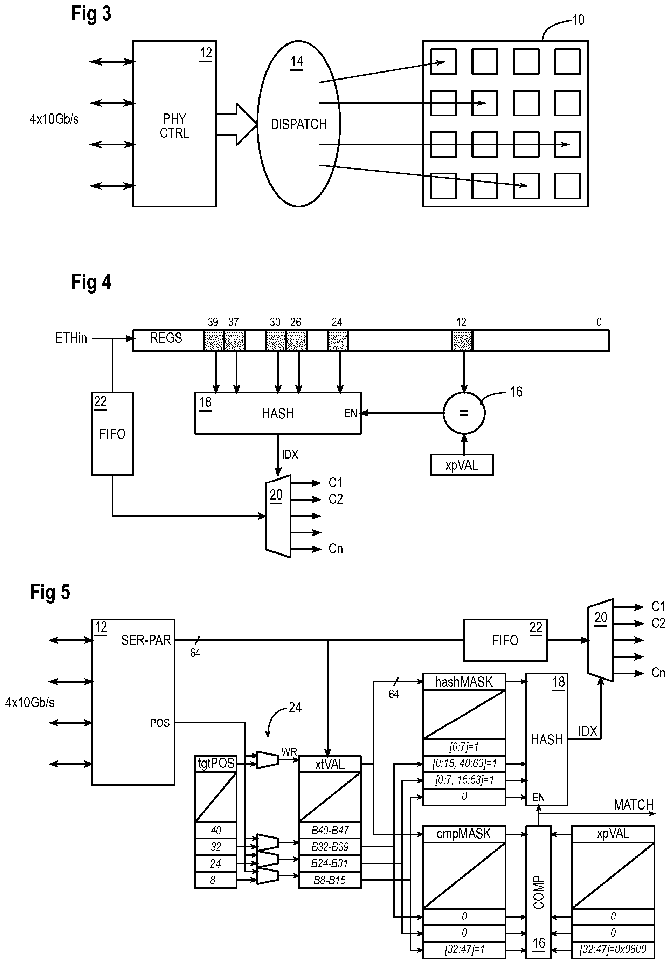

La figure 3 est un schéma de principe d'une carte d'interface réseau 40 Gbit dans laquelle est embarqué un processeur multi-cœurs 10 conçu pour décharger le processeur hôte du traitement des trames réseau. Le processeur 10 peut être du type comprenant plusieurs centaines de cœurs, comme un processeur de type MPPA proposé par la société Kalray.

La carte comprend en outre un circuit 12 de gestion de la couche physique, qui peut intégrer les fonctions d'une carte réseau classique, à savoir fournir et accepter des trames Ethernet brutes en passant par des conversions série-parallèle. On s'intéresse ici plus particulièrement au trafic Ethernet entrant que l'on souhaite traiter à l'aide du processeur 10. Une difficulté dans cette configuration est de répartir en temps réel et de manière optimale les trames reçues sur la centaine de cœurs du processeur 10.

La répartition 14 des trames entre plusieurs cœurs de processeur n'est pas triviale. Il ne suffit pas d'affecter les trames de manière circulaire aux cœurs, par exemple. En effet, il est alors probable que plusieurs cœurs distincts traitent indépendamment des données appartenant à une même session client-serveur, de sorte que les données de cette session se trouvent réparties dans les zones mémoire distinctes allouées aux cœurs. Il est alors difficile, ou du moins coûteux en ressources, de regrouper les données de la session pour qu'elles soient exploitables.

La figure 4 est un schéma de principe illustrant une méthode de répartition de trames mise en œuvre par le circuit de répartition 14. Cette méthode est basée sur l'établissement d'un jeu de règles de répartition qui assure que des trames relatives à une même session client-serveur soient toujours dirigées vers le même cœur de processeur. Les paramètres d'une trame permettant d'identifier une session dépendent des protocoles. Par exemple, pour les protocoles IPv4 et TCP (figures 1B et 1C), une session peut être identifiée par le protocole (B24), l'adresse IP source (B26-29), l'adresse IP destination (B30-33), le port source (B37-38) et le port destination (B39-40).

A la figure 4, le circuit met en œuvre une règle de répartition pour les trames TCP/IPv4, à titre d'exemple. Les octets successifs d'une trame entrante ETHin sont écrits dans une série de registres REGS, de la droite vers la gauche. Les octets de positions 12 et 13 (ETH TYPE) sont comparés en 16 à une valeur attendue xpVAL, ici le code identifiant le protocole IPv4 (0x0800). Pour les trames de type TCP/IPv4, les cinq paramètres identifiant une session démarrent aux octets 24, 26, 30, 37 et 39. Ces paramètres sont fournis à un circuit 18 qui produit un index IDX par une fonction de Hash. La fonction de Hash est configurée pour que l'index balaye le nombre de cœurs du processeur 10. L'index IDX sélectionne le cœur destination de la trame à l'aide d'un démultiplexeur 20 qui reçoit la trame mise en attente dans une mémoire FIFO 22.

Bien entendu, la trame courante écrite dans les registres REGS n'est pas forcément une trame de type TCP/IPv4. Toutes les trames sont systématiquement écrites dans les registres REGS. La nature de la trame est vérifiée par le comparateur 16 qui valide la production de l'index IDX seulement si les octets aux positions 12 et 13 (ETH TYPE) identifient le protocole IPv4.

Plusieurs circuits similaires pourront être prévus pour appliquer en parallèle des règles de répartition différentes couvrant la majorité des configurations utilisées dans les trames Ethernet. Les trames selon des configurations non prévues pourront être acheminées pour traitement vers le processeur hôte.

La figure 5 représente un mode de réalisation de circuit de répartition dont les règles de répartition sont programmables et qui permet de limiter la taille du jeu de registres servant à stocker les paramètres utiles des en-têtes des trames.

Le circuit 12 de gestion de la couche physique effectue une conversion série-parallèle des trames entrantes et produit, par exemple, des mots de 64 bits. Le circuit 12 comprend également un compteur qui produit la position POS du mot courant dans la trame.

Un banc de registres tgtPOS est conçu pour recevoir les positions de trame que l'on souhaite extraire pour analyse, en pratique ici les positions des mots de 64 bits à extraire. Les mots extraits sont stockés dans un banc de registres xtVAL, comprenant un registre de 64 bits pour chaque registre du banc tgtPOS.

Un jeu de comparateurs 24 compare la position courante POS produite par le circuit 12 simultanément aux contenus de tous les registres tgtPOS. En cas d'égalité, le registre xtVAL correspondant est sélectionné en écriture WR pour recevoir le mot courant de 64 bits produit par le circuit 12.

Ainsi, les registres tgtPOS sont destinés à identifier les mots de 64 bits contenant les paramètres que l'on souhaite analyser pour mettre en œuvre une règle de répartition. Ainsi, pour les trames de type TCP/IPv4, on souhaite extraire les mots de 64 bits de positions 8, 24, 32 et 40.

Chaque registre xtVAL contient alors une série d'octets parmi lesquels un sous-ensemble est utile. Par exemple, le premier registre xtVAL contient huit octets dont seulement les deux octets B12 et B13 sont utiles, ceux contenant hypothétiquement le paramètre ETH TYPE.

Pour extraire les octets utiles des registres xtVAL afin de les comparer à des valeurs attendues xpVAL, on prévoit un banc de registres cmpMASK servant à définir un masque de comparaison. De même, pour extraire les octets servant à identifier une session client-serveur, et donc à calculer l'index, on prévoit un banc de registres hashMASK servant à définir un masque de calcul d'index.

Un registre cmpMASK et un registre hashMASK sont associés à chaque registre xtVAL. Chacun de ces registres est programmé pour contenir des 1 aux positions des octets utiles du registre xtVAL, et des 0 aux autres positions. Un masquage est alors réalisé par une opération ET bit à bit des contenus des registres xtVAL et cmpMASK ou hashMASK.

En pratique, chaque registre de masque cmpMASK et hashMASK peut avoir un seul bit par octet du registre xtVAL correspondant. Alors, chaque bit du registre de masque peut définir de manière câblée l'ensemble des huit bits d'un octet correspondant d'un masque de 64 bits. En d'autres termes, un bit k du registre de masque (k étant un entier pris entre 0 et 7) définit les valeurs des bits 8k à 8k+7 du masque de 64 bits à comparer aux bits du registre xtVAL correspondant.

Dans l'exemple des trames de type TCP/IPv4, les bits 32 à 47 du premier masque cmpMASK, correspondant aux octets B12 et B13 contenus dans le premier registre xtVAL, sont à 1, et tous les autres bits sont à 0. Pour cela, les bits 4 et 5 du premier registre cmpMASK sont mis à 1.

Dans le deuxième masque hashMASK, les bits 0 à 7 et 16 à 63 sont à 1. Pour cela, les bits 0 et 2 à 7 du deuxième registre hashMASK sont mis à 1.

Dans le troisième masque hashMASK, les bits 0 à 15 et 40 à 63 sont à 1 (les bits 0, 1 et 5 à 7 du troisième registre hashMASK sont mis à 1). Finalement, dans le quatrième masque hashMASK, les bits 0 à 7 sont à 1, tous les autres bits étant à 0 (seul le bit 0 du quatrième registre hashMASK est mis à 1).

Les valeurs extraites contenues dans les registres xtVAL sont passées à travers le masque cmpMASK avant d'être comparées bit à bit en 16 aux contenus d'un banc de registres xpVAL. Un registre xpVAL est associé à chaque registre xtVAL et contient la valeur attendue masquée correspondante. Par exemple, les bits 32 à 47 du premier registre xpVAL contiennent la valeur hexadécimale 0x0800, code identifiant le protocole IPv4 dans le paramètre ETH TYPE, et tous les autres bits sont à 0.

En cas d'égalité, le comparateur 16 active un signal MATCH qui valide le calcul d'index IDX réalisé par le circuit 18. Le circuit 18 effectue le calcul d'index sur l'ensemble du contenu des registres xtVAL, masqué par les registres hashMASK.

Comme dans la figure 4, l'index IDX sélectionne le cœur destinataire de la trame courante, mise en attente dans la mémoire FIFO 22. L'aiguillage de la trame vers le cœur correspondant est illustré par un démultiplexeur 20 commandé par l'index IDX. En pratique, les cœurs de processeur peuvent être organisés dans un réseau-sur-puce ayant un nombre limité de points d'entrée. Dans ce cas les données sont acheminées vers les cœurs depuis un point d'entrée quelconque dans des paquets de réseau-sur-puce comprenant un en-tête qui définit la destination. L'opération d'aiguillage peut alors consister à insérer dans les paquets de réseau-sur-puce des destinations basées sur les valeurs de l'index. Par exemple, les destinations peuvent être fournies par une table d'indirection indexée par l'index IDX.

Le nombre de registres du banc xtVAL est choisi suffisant pour contenir tous les paramètres des en-têtes des trames Ethernet pouvant identifier des sessions client-serveur. En pratique, avec les protocoles existants, une dizaine de registres suffit.

Dans l'exemple des trames IPv4, on s'aperçoit qu'un seul des registres xpVAL est utilisé. Cela est dû au fait que, dès qu'on utilise le protocole IPv4, les paramètres servant à identifier une session sont toujours à la même position, quelle que soit la couche de transport utilisée (TCP, UDP ou SCTP).

Pour d'autres types de trame, on peut être amené à évaluer plusieurs paramètres avant d'identifier ceux utilisables pour définir une session client-serveur. Par exemple, dans les trames TRILL, on est amené à examiner deux paramètres ETH TYPE à des positions différentes (12, 13 et 32, 33).

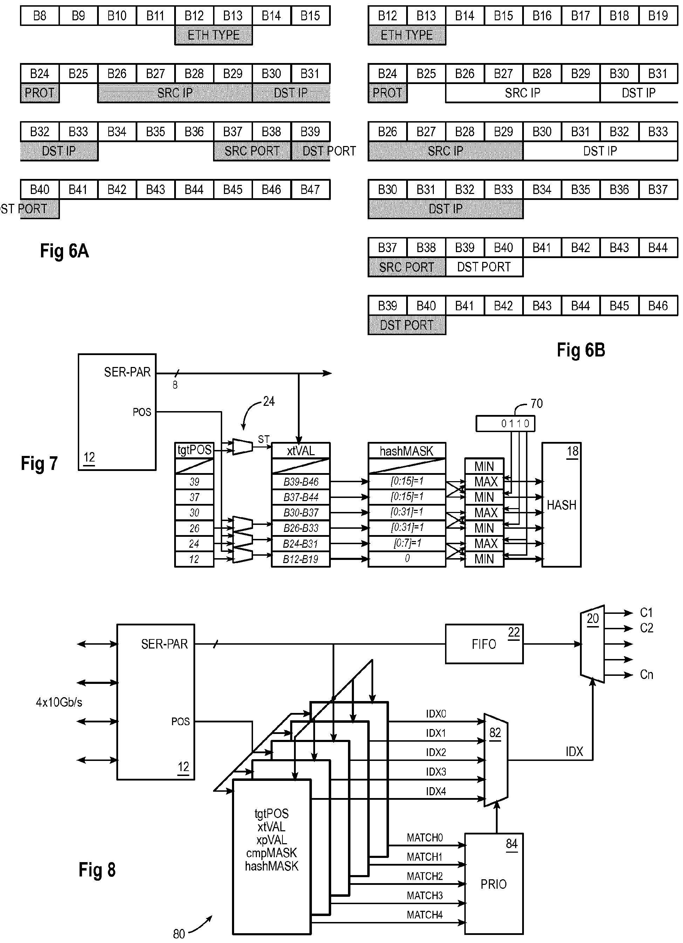

La figure 6A illustre de façon plus détaillée le contenu des premiers registres xtVAL, dans l'exemple d'une trame TCP/IPv4. Les parties grisées désignent les paramètres utiles et également les octets qui sont mis à 1 dans les registres de masque cmpMASK (pour le paramètre ETH TYPE) et hashMASK (pour les autres paramètres). On s'aperçoit que certains registres contiennent plusieurs paramètres à des positions quelconques et que certains paramètres sont à cheval sur deux registres. Cela ne pose aucun problème, car cette disposition des paramètres est traitée de façon transparente en configurant adéquatement les masques de comparaison et de calcul d'index.

On notera également que l'ordre de remplissage des registres xtVAL dépend de l'ordre des positions cible écrites dans les registres tgtPOS. Dans les exemples, les registres tgtPOS ont été remplis dans l'ordre des paramètres dans les trames. Un ordre différent pourrait être utilisé, ce qui modifierait la valeur de l'index pour les mêmes valeurs des paramètres.

La figure 6B illustre un autre mode de remplissage du banc de registres xtVAL. Avec ce mode de remplissage, chaque paramètre est rangé au début d'un registre xtVAL respectif. On a représenté l'exemple d'une trame TCP/IPv4. Chacun des six paramètres, illustré en grisé, est rangé au début d'un registre correspondant. Compte tenu que la taille des registres peut être à cheval sur plusieurs paramètres, certains des paramètres se retrouvent dupliqués à d'autres positions des registres, comme cela est illustré pour des paramètres en blanc. Les masques cmpMASK et hashMASK seront configurés pour ne tenir compte que des paramètres en début de registre - les zones grisées correspondent aux positions mises à 1 des masques.

La figure 7 représente partiellement un exemple de circuit de répartition conçu pour mettre en œuvre le mode de remplissage du banc de registres xtVAL de la figure 6B. Le circuit de commande 12 produit les trames par mots de 8 bits, ou octets. La position POS produite par le circuit 12 peut ainsi être la position de l'octet courant dans la trame. Chaque registre xtVAL peut être associé à une machine d'état qui provoque l'enregistrement de huit octets consécutifs de la trame entrante dès que le comparateur 24 associé détecte l'égalité entre la position POS courante et le contenu du registre tgtPOS associé.

Le mode de remplissage de la figure 6B permet de mettre en œuvre des opérations complémentaires sur les contenus des registres xtVAL avant de les utiliser pour calculer l'index IDX. En particulier, il peut être avantageux du point de vue des ressources de calcul qu'une même ressource de calcul traite les deux directions d'une session client-serveur, c'est-à-dire les requêtes du client et les réponses du serveur. Les trames de ces deux directions diffèrent seulement par l'interversion des adresses destination et source, et l'interversion des ports destination et source (pour des trames de type IPv4 ou IPv6). Pour que l'index calculé soit le même pour les deux directions, et donc que la même ressource de calcul soit allouée aux deux directions, il suffit, dans les trames de l'une des directions, d'intervertir les positions destination et source pour les adresses et les ports.

La figure 7 représente en outre un circuit offrant cette fonctionnalité. Un couple d'opérateurs MIN, MAX est attribué à chaque paire de registres xtVAL. Ces opérateurs sont configurés pour opérer sur les valeurs masquées à travers les registres hashMASK. Chaque opérateur MIN produit la valeur minimale des deux valeurs masquées associées, et chaque opérateur MAX produit la valeur maximale des deux valeurs masquées associées.

Chacune des paires d'opérateurs MIN, MAX est activable par un bit d'un registre de configuration 70. Lorsque le bit d'activation est à 0, les opérateurs MIN, MAX correspondants sont inactifs et transmettent les valeurs inchangées.

Avec cette configuration, en assurant que les paramètres destination et source sont placés dans les registres associés à une même paire d'opérateurs MIN, MAX, l'index produit sera le même pour les trames des deux directions d'une même session client-serveur. Les valeurs indiquées à la figure 7 correspondent à l'exemple des trames TCP/IPv4. Les deuxième et troisième paires d'opérateurs MIN, MAX sont activées pour traiter les adresses IP et les ports.

Si un paramètre destination/source est trop grand pour un registre xtVAL, par exemple une adresse IPv6 de 16 octets qui ne tient pas dans un registre de 64 bits (8 octets), les valeurs des positions cible dans les registres tgtPOS peuvent être ordonnées de manière que les deux parties du paramètre destination/source soient rangées dans deux registres de même parité, c'est-à-dire en correspondance avec le même type d'opérateur MIN, MAX.

Le jeu de registres tgtPOS, xtVAL, xpVAL, cmpMASK et hashMASK tel que décrit ci-dessus permet de concevoir une règle de répartition associée à une seule catégorie de trames. Par « catégorie de trames » on entend des trames selon des protocoles différents qui peuvent utiliser les mêmes paramètres de session client-serveur. Par exemple, la règle conçue pour les trames TCP/IPv4 s'applique à tous les protocoles IPv4, à savoir TCP, UDP et SCTP.

La figure 8 représente schématiquement un circuit de répartition capable de traiter plusieurs catégories de trames Ethernet. Il comprend plusieurs jeux de bancs de registres 80, chaque jeu pouvant être programmé pour traiter une catégorie différente de trames. Ces jeux de bancs de registres fonctionnent en parallèle, c'est-à-dire que chacun extrait de la trame courante des valeurs à analyser et produit, le cas échéant, un index respectif (IDX0, IDX1...). Les index des différents jeux de registres peuvent être fournis à un multiplexeur 82 qui sélectionne l'index IDX à utiliser comme destination de la trame courante.

Le multiplexeur 82 est commandé par un circuit de gestion de priorité 84 sur la base des signaux d'égalité MATCH produits par les jeux de bancs de registres. En principe, les règles sont conçues pour qu'une seule soit satisfaite à la fois. Dans ce cas, le circuit 84 sélectionne l'index produit par le jeu de bancs de registres qui active son signal MATCH.

Dans certains cas, on peut établir deux règles différentes qui seront satisfaites par une même trame, produisant deux index différents. Dans ce cas, le circuit 84 peut être programmé pour établir une priorité entre ces deux règles lorsque les deux sont satisfaites, et ainsi sélectionner en 82 l'index produit par la règle ayant le niveau de priorité le plus élevé.

Dans le traitement de trames IP (IPv4 ou IPv6), avec les règles telles que que décrites jusqu'ici, on a comparé le paramètre ETH_TYPE à une valeur attendue xpVAL, et on a établi un index à partir des cinq paramètres PROTOCOL, SRC_IP, DST_IP, SRC_PORT, et DST_PORT. On notera ce type de règle {cmp(ETH_TYPE = IPv4), hash(PROTOCOL, SRC_IP, DST_IP, SRC_PORT, DST_PORT)}.

Dans certains cas, on peut souhaiter calculer l'index de manière différente selon la sous-catégorie de trame, par exemple pour allouer plus de ressources de calcul à des sous-catégories de trame plus fréquentes. Ainsi, pour des trames IP (IPv4 ou IPv6), on peut établir les trois règles parallèles suivantes :
1) {cmp(ETH_TYPE = IPv4), hash(SRC_IP, DST_IP)},
2) {cmp(ETH_TYPE=IPv4, PROTOCOL=UDP), hash(SRC_IP, DST_IP, SRC_PORT, DST_PORT)},
3) {cmp(ETH_TYPE=IPv4, PROTOCOL= TCP), hash(SRC_IP, DST_IP, SRC_PORT, DST_PORT)}

Avec ce jeu de règles, toute trame UDP satisfait simultanément les règles 1 et 2, et toute trame TCP satisfait simultanément les règles 1 et 3. Les priorités peuvent alors être établies pour utiliser la règle de rang le plus élevé, c'est-à-dire que les trames UDP seront traitées selon la règle 2 et les trames TCP selon la règle 3, la règle 1 étant une règle « par défaut » utilisée pour traiter les trames autres que UDP et TCP.

On pourrait également établir le jeu de règles suivant :
1) {cmp(ETH_TYPE = IPv4), hash(SRC_IP, DST_IP)},
2) {cmp(ETH_TYPE=IPv4, PROTOCOL=UDP), hash(SRC_IP, DST_IP, SRC_PORT, DST_PORT)},
3) {cmp(ETH_TYPE=IPv4, PROTOCOL= TCP), hash(SRC_IP, DST_IP, SRC_PORT, DST_PORT)},
4) {cmp(ETH_TYPE=IPv4, PROTOCOL= TCP, SRC_PORT=80), hash(SRC_IP, DST_IP, SRC_PORT, DST_PORT)}

Par rapport au jeu de règles précédent, on a ajouté la règle 4, similaire à la règle 3 mais qui compare le port source SRC_PORT à la valeur 80, c'est-à-dire le port standard pour le protocole HTTP.

Dans ce cas, toute trame TCP/HTTP satisfait simultanément les règles 1, 3 et 4. La trame sera traitée selon la règle 4, de rang le plus élevé.

En pratique, l'essentiel du trafic sur une liaison Ethernet peut être traité en prévoyant cinq à huit jeux de bancs de registres. Les règles que l'on peut ainsi définir ne traitent pas tous les types de trames. Ces trames, exceptionnelles ou représentant un faible trafic, peuvent être dirigées vers un cœur par défaut, ou bien vers le processeur hôte.

## Revendications

1. Procédé de traitement de trames de données arrivant sur une interface réseau, comprenant les étapes suivantes mises en œuvre dans l'interface réseau :
• stocker un jeu de positions cible (tgtPOS), positions auxquelles sont attendus, dans une trame, au moins un paramètre caractérisant une sous-trame (ETH_TYPE) et des paramètres (SRC_IP, DST_IP) caractérisant une session client-serveur ;
• stocker une valeur attendue (xpVAL) pour le paramètre de sous-trame ;
• recevoir une trame courante ;
• démarrer un compteur de position (POS) de la trame ;
• lorsque la position courante indiquée par le compteur correspond à la position cible du paramètre de sous-trame, comparer la valeur (xtVAL) courante reçue de la trame à la valeur attendue ;
• en cas d'égalité, calculer un index (IDX) à partir des valeurs reçues aux positions cible des paramètres de session ; et
• diriger la trame courante vers une ressource de traitement associée à l'index.

2. Procédé selon la revendication 1, comprenant les étapes suivantes :
• produire les données de la trame courante par mots de taille fixe ;
• lorsqu'un mot courant de la trame inclut une position cible, stocker le mot dans un registre respectif d'un banc de registres de valeurs extraites (xtVAL) ;
• configurer un masque d'index (hashMASK) sur l'ensemble du banc de registres de valeurs extraites pour annuler toutes les valeurs sauf celles aux positions des paramètres de session ; et
• calculer l'index sur l'ensemble du banc de registres de valeurs extraites à travers le masque d'index.

3. Procédé selon la revendication 2, comprenant les étapes suivantes :
• stocker des valeurs attendues pour plusieurs paramètres de sous-trame dans un banc de registres de valeurs attendues (xpVAL) en correspondance avec les registres de valeurs extraites (xtVAL) ;
• configurer un masque de comparaison (cmpMASK) sur l'ensemble du banc de registres de valeurs extraites pour annuler toutes les valeurs sauf celles aux positions des paramètres de sous-trame ; et
• comparer le contenu du banc de registres de valeurs extraites au contenu du banc de registres de valeurs attendues à travers le masque de comparaison.

4. Procédé selon la revendication 2, comprenant les étapes suivantes :
• stocker les positions cible dans des registres respectifs d'un banc de registres de positions cible (tgtPOS), associés respectivement aux registres de valeurs extraites (xtVAL) ;
• comparer simultanément les contenus de tous les registres de positions cible au compteur de position (POS) ; et
• en cas de correspondance entre le compteur de position et le contenu d'un registre de position cible, stocker le mot courant de la trame dans le registre de valeur extraite associé au registre de position cible.

5. Procédé selon la revendication 3, comprenant les étapes suivantes :
• prévoir une pluralité de règles de répartition indépendantes, où chaque règle de répartition utilise un jeu de positions cible (tgtPOS), un banc de registres de valeurs extraites (xtVAL), un masque d'index (hashMASK), un masque de comparaison (cmpMASK), et un banc de registres de valeurs attendues (xpVAL) ;
• définir un ordre de priorité entre les règles de répartition ;
• évaluer en parallèle les règles de répartition sur une trame courante ; et
• utiliser l'index produit par la règle de répartition ayant la priorité la plus élevée parmi plusieurs règles satisfaites simultanément.

6. Procédé selon la revendication 2, comprenant les étapes suivantes :
• définir les positions cible des paramètres de session pour que chaque valeur reçue à une position de paramètre de session soit stockée dans un registre de valeur extraite distinct ; et
• si deux registres de valeurs extraites sont destinés à contenir respectivement un paramètre de source (SRC_IP) et un paramètre de destination (DST_IP), calculer l'index en utilisant dans le même ordre la valeur maximale des contenus des deux registres et la valeur minimale des contenus des deux registres.

## Patentansprüche

1. Verfahren zur Verarbeitung von Datenrahmen, die an einer Netzwerkschnittstelle ankommen, mit den folgenden in der Netzwerkschnittstelle implementierten Schritten:
• Speichern eines Satzes von Zielpositionen (tgtPOS), an denen mindestens ein Parameter, der einen Unterrahmen (ETH_TYPE) charakterisiert, und Parameter (SRC_IP, DST_IP), die eine Client-Server-Sitzung charakterisieren, in einem Rahmen erwartet werden;
• Speichern eines erwarteten Wertes (xpVAL) für den Unterrahmenparameter;
• Erhalten eines aktuellen Rahmens;
• Starten eines Positionszählers (POS) des Rahmens;
• wenn die vom Zähler angezeigte aktuelle Position der Zielposition des Unterrahmenparameters entspricht, Vergleichen des vom Rahmen erhaltenen aktuellen Werts (xtVAL) mit dem erwarteten Wert;
• Berechnen eines Index (IDX) aus den an den Zielpositionen der Sitzungsparameter erhaltenen Werten im Falle einer Übereinstimmung; und
• Leiten des aktuellen Rahmens an eine dem Index zugeordnete Verarbeitungsressource.

2. Verfahren nach Anspruch 1, umfassend die folgenden Schritte:
• Generieren der Daten des aktuellen Rahmens in Worten fester Größe;
• wenn ein aktuelles Wort des Rahmens eine Zielposition enthält, Speichern des Worts in einem entsprechenden Register einer Registerbank der extrahierten Werte (xtVAL);
• Konfigurieren einer Indexmaske (hashMASK) über die gesamte Registerbank der extrahierten Werte, um alle Werte außer denen an den Sitzungsparameterpositionen zu löschen; und
• Berechnen des Index auf der gesamten Registerbank der über die Indexmaske extrahierten Werte.

3. Verfahren nach Anspruch 2, umfassend die folgenden Schritte:
• Speichern der erwarteten Werte für mehrere Unterrahmenparameter in einer Registerbank der erwarteten Werte (xpVAL) in Übereinstimmung mit den Registern der extrahierten Werte (xtVAL);
• Konfigurieren einer Vergleichsmaske (cmpMASK) über die gesamte Registerbank der extrahierten Werte, um alle Werte außer denen an den Positionen der Unterrahmenparameter zu löschen; und
• Vergleichen des Inhalts der Registerbank der extrahierten Werte mit dem Inhalt der Registerbank der erwarteten Werte über die Vergleichsmaske.

4. Verfahren nach Anspruch 2, umfassend die folgenden Schritte:
• Speichern der Zielpositionen in entsprechenden Registern einer Registerbank der Zielpositionen (tgtPOS), die jeweils den Registern der extrahierten Werte (xtVAL) zugeordnet sind;
• gleichzeitiges Vergleichen der Inhalte aller Register der Zielpositionen mit dem Positionszähler (POS); und
• bei Übereinstimmung zwischen dem Positionszähler und dem Inhalt eines Registers der Zielposition, Speichern des aktuellen Worts des Rahmens im Register des extrahierten Werts, das dem Register der Zielposition zugeordnet ist.

5. Verfahren nach Anspruch 3, umfassend die folgenden Schritte:
• Bereitstellen mehrerer unabhängiger Zuteilungsregeln, wobei jede Zuteilungsregel einen Zielpositionssatz (tgtPOS), eine Registerbank der extrahierten Werte (xtVAL), eine Indexmaske (hashMASK), eine Vergleichsmaske (cmpMASK) und eine Registerbank der erwarteten Werte (xpVAL) verwendet;
• Definieren einer Prioritätsreihenfolge zwischen den Zuteilungsregeln;
• paralleles Evaluieren der Zuteilungsregeln für einen aktuellen Rahmen; und
• und Verwenden des Index, der durch die Zuteilungsregel mit der höchsten Priorität unter mehreren gleichzeitig erfüllten Regeln erzeugt wird.

6. Verfahren nach Anspruch 2, umfassend die folgenden Schritte:
• Definieren der Zielpositionen der Sitzungsparameter in der Form, dass jeder an einer Sitzungsparameterposition empfangene Wert in einem eigenen Register der extrahierten Werte gespeichert wird; und
• wenn zwei Register der extrahierten Werte jeweils einen Quellparameter (SRC_IP) und einen Zielparameter (DST_IP) enthalten sollen, berechnen des Index unter Verwendung des Maximalwerts des Inhalts der beiden Register und des Minimalwerts des Inhalts der beiden Register in der gleichen Reihenfolge.

## Claims

1. A method of processing data frames arriving on a network interface, comprising the following steps implemented in the network interface:
• storing a set of target positions (tgtPOS), positions in a frame at which are expected at least one parameter characterizing a subframe (ETH_TYPE) and parameters (SRC IP, DST_IP) characterizing a client-server session;
• storing an expected value (xpVAL) for the subframe parameter;
• receiving a current frame;
• starting a frame position counter (POS);
• when the current position indicated by the counter corresponds to the target position of the subframe parameter, comparing the current value (xtVAL) received of the frame to the expected value;
• if equal, calculating an index from the values (IDX) received at the target positions of the session parameters; and
• routing the current frame to a processing resource associated with the index.

2. The method of claim 1, comprising the steps of:
• producing the data of the current frame in fixed size words (64, 8);
• when a current word of the frame includes a target position, storing the word in a respective register of an extracted value register bank (xtVAL) ;
• configuring an index mask (hashMASK) over the extracted value register bank to cancel all values except those at the positions of the session parameters; and
• calculating the index over the extracted value register bank through the index mask.

3. The method of claim 2, comprising the steps of:
• storing expected values for several subframe parameters in an expected value register bank (xpVAL) in correspondence with the extracted value registers (xtVAL) ;
• configuring a comparison mask (cmpMASK) over the extracted value register bank to cancel all values except those at the positions of the subframe parameters; and
• comparing the contents of the extracted value register bank to the contents of the expected value register bank through the comparison mask.

4. The method of claim 2, comprising the steps of:
• storing the target positions in respective registers of a target position register bank (tgtPOS), respectively associated with the extracted value registers (xtVAL) ;
• simultaneously comparing the contents of all target position registers to the position counter (POS); and
• in case of correspondence between the position counter and the contents of a target position register, storing the current word of the frame in the extracted value register associated with the target position register.

5. The method of claim 3, comprising the steps of:
• providing a plurality of independent dispatching rules, where each dispatching rule uses a set of target positions (tgtPOS), an extracted value register bank (xtVAL), an index mask (hashMASK), a comparison mask (cmpMASK), and an expected value register bank (xpVAL) ;
• setting priorities between the dispatching rules;
• evaluating in parallel the dispatching rules on a current frame; and
• using the index produced by the dispatching rule having the highest priority among multiple rules simultaneously satisfied.

6. The method of claim 2, comprising the steps of:
• defining the target positions of the session parameters so that each value received at a session parameter position is stored in a distinct extracted value register; and
• if two extracted value registers are designed to respectively contain a source parameter (SRC IP) and a destination parameter (DST IP), calculating the index using, in the same order, the maximum value of the contents of the two registers and the minimum value of the contents of the two registers.
